# EUROPEAN PATENT SPECIFICATION

(11) **EP 4 503 822 B1**
(45) Date of publication and mention of the grant of the patent: **12.08.2026**
(21) Application number: 24218820.9
(22) Date of filing: 05.02.2021
(51) Int. Cl.: H04W 76/15, H04W 76/28, H04W 72/21, H04W 84/12

(54) **MULTI-LINK AGGREGATION METHOD, STATION MULTI-LINK DEVICE, AND ACCESS POINT MULTI-LINK DEVICE**
MULTILINK-AGGREGATIONSVERFAHREN, STATIONSMULTILINK-VORRICHTUNG UND ZUGANGSPUNKT-MULTILINK-VORRICHTUNG
PROCÉDÉ D'AGRÉGATION DE LIAISONS MULTIPLES, DISPOSITIF DE LIAISONS MULTIPLES DE STATION ET DISPOSITIF DE LIAISONS MULTIPLES DE POINT D'ACCÈS

(43) Date of publication of application: 05.02.2025
(62) Document number(s) of the earlier application(s) in accordance with Art. 76 EPC: 21923783.1 / 4 266 821
(73) Proprietor: GUANGDONG OPPO MOBILE TELECOMMUNICATIONS CORP., LTD., Dongguan, Guangdong 523860 (CN)
(72) Inventor: ZHOU, Taihong, Dongguan, Guangdong 523860 (CN); HOU, Ronghui, Dongguan, Guangdong 523860 (CN); HUANG, Lei, Dongguan, Guangdong 523860 (CN); LU, Liuming, Dongguan, Guangdong 523860 (CN); LUO, Chaoming, Dongguan, Guangdong 523860 (CN)
(74) Representative: Taor, Simon Edward William

(56) References cited:
- US-A1- 2020 404 737
- ABHISHEK PATIL (QUALCOMM): "MLO: Discovery and beacon-bloating", vol. 802.11 EHT; 802.11be, 15 March 2020 (2020-03-15), pages 1 - 16, XP068167069, Retrieved from the Internet <URL:https://mentor.ieee.org/802.11/dcn/20/11-20-0356-00-00be-mlo-discovery-and-beacon-bloating.pptx>

## Description

### TECHNICAL FIELD

The present disclosure relates to the communication field, in particular to a method of multi-link aggregation, a station multi-link device and an access point multi-link device.

### BACKGROUND

In order to increase network capacity and reduce network delay, a Multi-Link Aggregation (MLA) technology is introduced. In a system supporting the MLA technology, some services can be transmitted on at least two links. A device that supports the MLA is a Multi-Link Device (MLD).

In order to solve the problem of multi-link aggregation of the MLD that does not support a Synchronous Transmit Receive (STR) function, a method of multi-link aggregation based on Back-off Counter (BC) is introduced. However, for real-time video stream, Virtual Reality (VR), Augmented Reality (AR) and other application scenarios with short latency and high throughput, the method of multi-link aggregation based on the BC has the problems of low success rate and high latency. Therefore, how to realize multi-link aggregation with high success rate and low latency is an urgent problem to be solved.

Related technology is known form US 2020/404737, which discusses that an EHT station (EHT STA) decodes a beacon frame received from ETH access points (Aps) including a multi-link beacon check element to indicate which of one or more links has update to its link parameters. When the multi-link beacon check element indicates an update to link parameters for the link between the EHT STA and its associated EHT AP, the EHT STA obtains the updated link parameters either waking-up at a target beacon transmission time (TBTT) or sends a probe request.

### SUMMARY

The invention is set out in the appended set of claims. The present disclosure provides a method of multi-link aggregation, a station multi-link device and an access point multi-link device, which are beneficial to realizing multi-link aggregation transmission with success rate and low latency.

According to technical solutions, by transmitting first information to an access point multi-link device, a station multi-link device indicates at least one target link for which the station multi-link device is required to be assisted by the access point multi-link device in monitoring, thereby solving the problem that the multi-link device that does not support STR cannot monitor link states of other links when transmitting or receiving data in a link. Further, the station multi-link device obtains at least one link state of the at least one target link for which the station multi-link device is assisted by the access point multi-link device in monitoring, and then performs the multi-link aggregation, which improves the throughput of the system and the success rate of link aggregation.

### BRIEF DESCRIPTION OF THE DRAWINGS

FIG. 1 illustrates a diagram of a communication system architecture provided by an embodiment of the present disclosure.
FIG. 2 illustrates from left to right a diagram of data arrival rate varying with time, a diagram of single link capacity varying with time and a diagram of latency caused by capacity fluctuation of a single link.
FIG. 3 illustrates a performance simulation diagram under three access modes: a single link access mode, a multi-link synchronous access mode and a multi-link asynchronous access mode.
FIG. 4 illustrates a diagram of BC-based multi-link aggregation transmission.
FIG. 5 illustrates an interaction diagram of a method of multi-link aggregation provided according to an embodiment of the present disclosure.
FIG. 6 illustrates an example diagram of a frame format of a control wrapper frame.
FIG. 7 illustrates an example diagram of a frame format of a management frame.
FIG. 8 illustrates an example diagram of a frame format of a data frame.
FIG. 9 illustrates an example diagram of a frame format of a BA frame.
FIG. 10 illustrates an example diagram of a frame format of an action frame.
FIG. 11 illustrates an interaction diagram of a method of multi-link aggregation.
FIG. 12 illustrates an interaction diagram of a method of multi-link aggregation.
FIG. 13 illustrates a block diagram of a station multi-link device provided according to a non-claimed embodiment of the present disclosure.
FIG. 14 illustrates a block diagram of an access point multi-link device provided according to a non-claimed embodiment of the present disclosure.
FIG. 15 illustrates a block diagram of a communication device provided according to an embodiment of the present disclosure.
FIG. 16 illustrates a block diagram of a chip provided according to a non-claimed embodiment of the present disclosure.
FIG. 17 illustrates a block diagram of a communication system provided according to a non-claimed embodiment of the present disclosure.

### DETAILED DESCRIPTION

The technical solutions in embodiments of the present disclosure will be described below in conjunction with the drawings in the embodiments of the present disclosure.

The technical solutions of the embodiments of the present disclosure can be applied to various communication systems, such as Wireless Local Area Networks (WLAN), Wireless Fidelity (WiFi) or other communication systems.

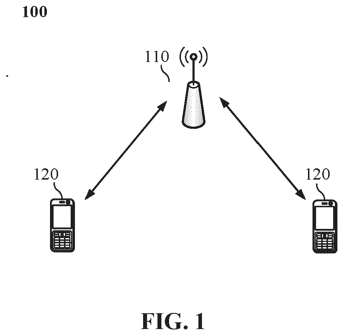

Exemplarily, a communication system 100 to which the embodiments of the present disclosure are applied is illustrated in FIG. 1. The communication system 100 may include an Access Point (AP) 110 and STATIONs (STAs) 120 accessing a network through the AP 110.

In an embodiment of the present disclosure, the STA may be a Mobile Phone, a Pad, a computer with wireless transceiver function, a Virtual Reality (VR) device, an Augmented Reality (AR) device, a wireless device in industrial control, a wireless device in self driving, a wireless device in remote medical, a wireless device in smart grid, a wireless device in transportation safety, a wireless device in smart city or a wireless device in smart home, etc.

FIG. 1 exemplarily illustrates one AP and two STAs. Alternatively, the communication system 100 may include a plurality of APs as well as other numbers of STAs. There are no limits made thereto in the embodiments of the preset disclosure.

It should be understood that, a device having a communication function in a network/system in the embodiments of the present disclosure may be referred to as a communication device. Taking the communication system 100 illustrated in FIG. 1 as an example, the communication device may include an Access Point 110 and a Station 120 having a communication function which may be specific devices described above and will not be repeated here. The communication device may further include other devices in the communication system 100, such as network controllers, gateways and other network entities. There are no limits made thereto in the embodiments of the preset disclosure.

It should be understood that the terms "system" and "network" herein are often used interchangeably. The term "and/or" herein is only an association relationship describing associated objects, which means that there may be three relationships. For example, "A and/or B" may have three meanings: A exists alone, A and B exist at the same time and B exists alone. In addition, the character "/" herein generally indicates that the associated objects before and after the character "/" are in an "or" relationship.

It should be understood that the reference to "indication" in the embodiments of the present disclosure may be a direct indication, an indirect indication, or may represent that there is an association relationship. For example, "A indicates B" may have following meanings: A directly indicates B, for example, B can be obtained through A; A indirectly indicates B, for example, A indicates C, and B can be obtained through C; and there is an association relationship between A and B.

In the description of the embodiments of the present disclosure, the term "correspondence" may have following meanings: there is a direct correspondence or an indirect correspondence relationship between the two; there is an association relationship between the two; a relationship between indicate and being indicated, configure and being configured, etc.

In the embodiments of the present disclosure, "predefinition" may be implemented by pre-storing corresponding codes, tables, or other means that may be used for indicating relevant information in devices (e.g., including access points and stations). The specific implementation of "predefinition" is not limited in the present disclosure. For example, "predefinition" can refer to definition in the protocol.

In order to facilitate understanding of the technical solutions of the embodiments of the present disclosure, the technical solutions of the present disclosure will be described in detail below by way of detailed embodiments. As optional solutions, the following related technologies can be arbitrarily combined with the technical solutions of the embodiments of the present disclosure, and all of combinations belong to the protection scope of the embodiments of the present disclosure. The embodiments of the present disclosure include at least some of the following contents.

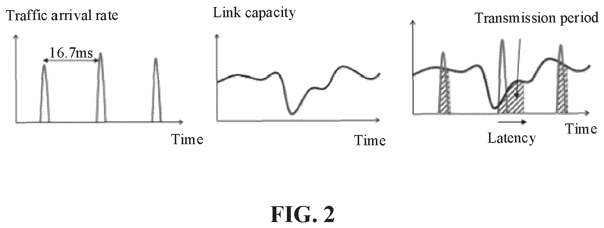

With the increase of the number of low-latency and high-definition video stream application scenarios, data transmission has higher requirements on network latency and network capacity. For example, for real-time video stream, VR, AR and other application scenarios, a large amount of data will be generated on one link in a transmission cycle (e.g., 16.7 ms) and needs to be sent out in a short time. However, because the link is affected by many factors (such as noise interference and multipath fading, etc.), the link capacity fluctuates greatly. If the generated traffic overlaps with the low link capacity, it will lead to higher latency. FIG. 2 illustrates from left to right a diagram of data arrival rate varying with time, a diagram of single link capacity varying with time, and a diagram of latency caused by capacity fluctuation of a single link.

Based on the above problems, a Multi-Link Aggregation (MLA) technology is introduced. In a system supporting the MLA technology, some services can be transmitted on at least two links. Therefore, the MLA technology can effectively increase network capacity and reduce network delay.

Multi-link aggregation can be implemented in many ways, which can be divided into packet-based link aggregation and traffic-based link aggregation. In the packet-based aggregation, frames of a single service flow (e.g., all services associated with a given traffic identification (TID)) may be transmitted simultaneously over multiple channels across multiple wireless links. The multiple wireless links may be in the same radio frequency (RF) (e.g., 5 GHz band) or in different frequency bands (e.g., one in 2.4 GHz band, another in 5 GHz band or 6 GHz band). Each link may be associated with a different physical layer (PHY) and a lower Media Access Control (MAC) layer. In traffic-based link aggregation, each service flow may be transmitted by using one of a plurality of available wireless links. For example, some data may be transmitted on the first link while being transmitted on the second link.

The multi-link aggregation has many advantages. Firstly, multiple links can transmit traffic belonging to the same TID at the same time, and channel diversity helps to smoothly transmit traffic and increase peak throughput during link fluctuation. Secondly, data packets on high capacity links can be multiplexed on underutilized links to achieve load balancing and make full use of spectrum resources. In addition, compared with a single link, the multi-link aggregation benefits applications such as wireless VR and interactive multiplayer games which require low latency, short turnaround time and handling burst traffic quickly.

A method of multi-link aggregation is mainly divided into the synchronous aggregation method and the asynchronous aggregation method. For the synchronous aggregation method, an enhanced distributed channel access (EDCA) back-off operation is performed only on a single main link. For example, energy detection (ED), which is also referred to as medium detection, is performed on a secondary link before performing data transmission on the main link, if the secondary link is idle, multi-link aggregation transmission is performed, otherwise, data is transmitted only on the main link. For the asynchronous aggregation method, the EDCA back-off operation is performed on each link independently and independent transmission opportunity (TXOP) is used on each link.

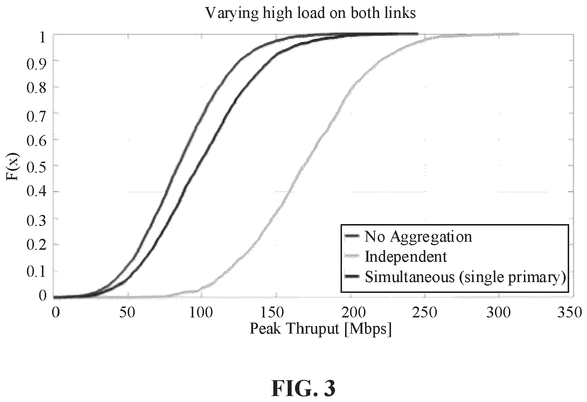

FIG. 3 illustrates a performance simulation diagram under three access modes: a single link access mode (No Aggregation), a multi-link synchronous access mode (Simultaneous (single primary)) and a multi-link asynchronous access mode (Independent). It can be seen from FIG. 3 that under the same conditions, peak throughput in the multi-link asynchronous access mode is the largest, followed by peak throughput in the multi-link synchronous access mode and peak throughput in the single link access mode is the smallest.

In 802.11 be, a multi-link logical entity carrying a newly defined multi-link protocol and framework to achieve higher performance requirements is defined. This logical entity is called a Multi-Link Device (MLD) which can support the MLA technology described above. The MLD can include, for example, an access point MLD (AP MLD) and a non-access point MLD (Non-AP MLD) which is also called a station MLD (STA MLD).

For an STAMLD that supports a Synchronous Transmit Receive (STR) function, each subsidiary STA of the STA MLD can perform EDCA competition mechanism independently, and clear channel assessment (CCA) detection among subsidiary STAs is not affected with each other, so it is easier to realize the multi-link aggregation technology. However, for an MLD that does not support the STR function, which can be called a Non-STR MLD, because a working frequency band interval of the subsidiary STAs of the Non-STR MLD is too small, there is In Device Coexistence (IDC) interference which makes it impossible for the STA to receive and transmit data at the same time, and working performance of the MLD is limited. That is to say, when one STA transmits data, another STA cannot receive data, which brings difficulties to the implementation of the multi-link aggregation function.

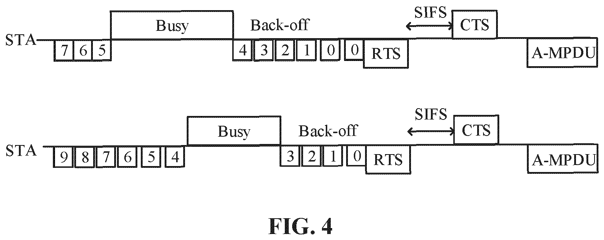

To solve this problem, a method of multi-link aggregation based on Back-off Counter (BC) is introduced. Each STA for one MLD performs an independent EDCA mechanism on each link. When BCs on two links reach 0, the STA can perform synchronous Physical layer Protocol Data Unit (PPDU) transmission. If the BC of an STA on one link is decremented to a counter value of 0, then the counter value of 0 remains unchanged until the BC of an STA on the other link reaches a counter value of 0. While waiting for the BC of the STA on another link to reach a counter value of 0, the STA can continue to monitor states of link medium on the link. FIG. 4 illustrates a diagram of an example of BC-based multi-link aggregation transmission, where SIFS represents a Short Interframe Space. The PPDU is an Aggregate Media Access Control (MAC) Protocol Data Unit (PDU), i.e., A-MPDU. A physical header part of the PPDU includes a Preamble and a Packet Layer Control Protocol (PLCP) header, one bit of the PLCP header indicates that the PPDU is A-MODU, and a MAC part of the PPDU may include a plurality of subframes.

However, the above solutions have following two main shortcomings for real-time video stream, VR, AR and other short latency and high throughput application scenarios. The first shortcoming is that the success rate of multi-link aggregation is not high. A STA of which BC first backs off to a counter value of 0 maintains the counter value unchanged, and completes the access after waiting for the BCs of other STAs to back off to a counter value of 0, thus realizing synchronous multi-link aggregation transmission. However, when the BC first backs off to a counter value of 0 and maintains the counter value of 0 unchanged, it will be occupied by the other STA device (which does not belong to the MLD that is performing the multi-link aggregation function), which results in the failure of the multi-link aggregation. The second shortcoming is that the latency is high. Although the multi-link aggregation function of the Non-STR MLD is realized to a certain extent by setting the BC, when the BC backs off to a counter value of 0 and the counter value of 0 maintains unchanged, there will be a large latency for latency-sensitive service flows. Therefore, how to realize multi-link aggregation with high success rate and low latency is an urgent problem to be solved.

In view of this, the present disclosure provides a multi-link aggregation scheme, which can solve the problem that the Non STR MLD cannot monitor link states of other links when transmitting or receiving data on one link. Meanwhile, the Non STR MLD obtains link states of other links for which the Non STR MLD is assisted by an access point multi-link device in monitoring, and then performs the multi-link aggregation, which improves the throughput of the system and the success rate of link aggregation.

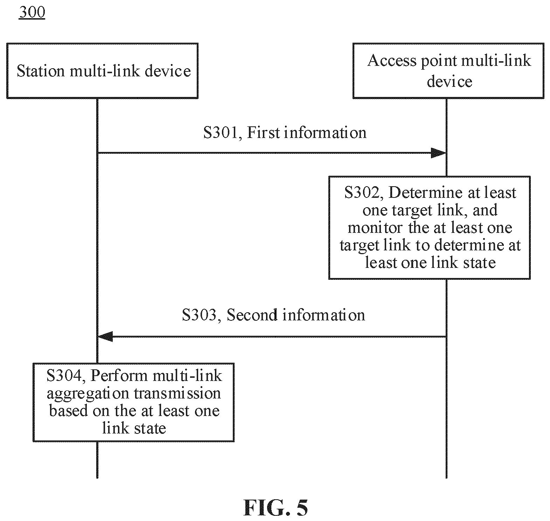

FIG. 5 illustrates an interaction diagram of a method 300 of multi-link aggregation provided according to an embodiment of the present disclosure. As illustrated in FIG. 5, the method 300 includes at least some of the following operations.

At an operation S301, a station multi-link device transmits first information to an access point multi-link device. The first information is used for determining at least one target link for which the station multi-link device is required to be assisted by the access point multi-link device in monitoring.

In some embodiments, a plurality of links are established between the station multi-link device and the access point multi-link device. If there is a large number of burst traffic on the station multi-link device side and the traffic need to be transmitted to the access point multi-link device in a short time (such as real-time video stream, VR, AR and other scenarios), the station multi-link device may adopt a multi-link aggregation transmission mode.

It should be understood that the number of links established between the station multi-link device and the access point multi-link device is not specifically limited in the embodiments of the present disclosure. For example, the number of links established between the station multi-link device and the access point multi-link device may be 2, 3, or more, or the like.

It should be noted that the plurality of links may be in the same frequency band, or may be in different frequency bands. There are no limits made thereto in the embodiments of the preset disclosure.

It should be understood that the multi-link aggregation transmission of the embodiments of the present disclosure may be packet-based link aggregation, traffic-based link aggregation, or link aggregation based on other modes. The link aggregation mode is not limited in the present disclosure.

In an embodiment of the present disclosure, the station multi-link device may include two stations, or the station multi-link device may further include three or more stations. There are no limits made thereto in the embodiments of the preset disclosure.

In some embodiments of the present disclosure, the station multi-link device includes a plurality of stations, each of which corresponds to a link, and each station can perform multi-link aggregation transmission through the link corresponding to the station.

For example, a station may perform multi-link aggregation transmission with the acquisition of TXOP ownership of a link corresponding to the station.

In some embodiments, the station obtains TXOP ownership of a link corresponding to the station through an EDCA contention mechanism or TXOP ownership of a link corresponding to the station is transferred to the station device by the access point multi-link device. For example, in the case that an access point multi-link device obtains TXOP ownership of a link, the access point multi-link device may transfer the TXOP ownership of the link to a station multi-link device by transmitting a multi-user request to send (MU-RTS) to the station multi-link device.

In an embodiment of the present disclosure, the access point multi-link device may include two access points, or the access point multi-link device may include three or more access point devices. There are no limits made thereto in the embodiments of the preset disclosure.

In some embodiments of the present disclosure, the station multi-link device does not support the STR function, and the access point multi-link device supports the STR function. This is recorded as the first scenario.

For example, in the first scenario, among a plurality of STAs of the station multi-link device used for multi-link aggregation, some STAs obtain TXOP ownerships of links corresponding to the STAs, while some STAs do not obtain TXOP ownerships of links corresponding to the STAs. In this case, the technical solutions of the embodiments of the present disclosure can be used for performing the multi-link aggregation transmission.

In some embodiments, all STAs of a plurality of STAs of the station multi-link device used for multi-link aggregation obtain TXOP ownerships of links corresponding to the STAs. In this case, the station multi-link device may perform multi-link aggregation transmission by using the synchronous access mode described above.

In other embodiments of the present disclosure, the station multi-link device supports the STR function, and the access point multi-link device supports the STR function. This is recorded as the second scenario.

For example, in the second scenario, when the station multi-link device performs uplink multi-link aggregation, one or more STAs requiring uplink multi-link aggregation in the station multi-link device are in a doze state for the consideration of energy saving. In order to improve the efficiency of multi-link aggregation (e.g., to reduce the overhead of accessing the channel after the STA changes from a doze state to a wake state), the station multi-link device can transmit first information to the access point multi-link device for requesting the access point multi-link device to assist in monitoring states of links corresponding to STAs in the station multi-link device. In the invention, if a link corresponding to an STA is in an idle state, the STA changed from a doze state to a wake state can directly perform uplink multi-link aggregation after receiving feedback information from the access point multi-link device without performing a normal EDCA competition mechanism.

In some embodiments of the present disclosure, the at least one target link for which the station multi-link device is required to be assisted by the access point multi-link device in monitoring may include links of which TXOP ownerships are not obtained by STAs in the station multi-link device. This situation can be applied to the first scenario mentioned above.

For example, if the station multi-link device includes an STA1 corresponding to a link 1, an STA2 corresponding to a link 2, the STA1 obtains TXOP ownership of the link 1, and the STA2 does not obtain TXOP ownership of the link 2, the target link may include the link 2. That is to say, the access point multi-link device assists in monitoring a link state of the link 2.

In other embodiments of the present disclosure, the at least one target link for which the station multi-link device is required to be assisted by the access point multi-link device in monitoring may include links corresponding to STAs in a doze state in the station multi-link device. This situation can be applied to second scenario above.

For example, if the station multi-link device includes an STA1 corresponding to a link 1, an STA2 corresponding to a link 2, and the STA2 is in a doze state, the target link may include the link 2. That is to say, the access point multi-link device assists in monitoring a link state of the link 2.

In some embodiments of the present disclosure, the station multi-link device may generate first information based on information of at least one target link for which the station multi-link device is required to be assisted by the access point multi-link device in monitoring, and further transmit the first information to the access point multi-link device.

For example, the station multi-link device may transmit the first information on a link of which TXOP ownership is obtained by the station multi-link device. Alternatively, the TXOP ownership of the link may be obtained through an EDCA contention mechanism.

In some embodiments of the present disclosure, the information of the at least one target link is indicated by a bitmap, or the first information can directly include link ID information of the at least one target link, and the indication mode of the target link is not specifically limited in the present disclosure.

In some embodiments, the first information includes at least one of first indication information or a first bitmap. The first indication information is used for indicating that the at least one target link identified by the first bitmap is used for uplink multi-link aggregation. The first bitmap includes a plurality of bits, each of the plurality of bits corresponds to a link, and different values of the bit are used for indicating whether the link corresponding to the bit is a target link for which the station multi-link device is required to be assisted by the access point multi-link device in monitoring.

As an example, a value of the first indication information being a first value indicates that a target link identified by the first bitmap is used for uplink multi-link aggregation, and the value of the first indication information being other values indicates that information carried by the first bitmap is not used for uplink multi-link aggregation. In other words, when the value of the first indication information is the first value, contents carried in the first bitmap are interpreted based on information of the target link, and when the value of the first indication information is the other values, the contents carried in the first bitmap are interpreted based on other meanings.

As an example, if the maximum number of links corresponding to the multi-link aggregation is M, the first bitmap may include M bits, each bit corresponds to a link, or each bit corresponds to a link ID, and values of each bit are used for indicating whether the link corresponding to the bit is a target link. For example, a value of a bit being 1 represents that a link corresponding to the bit is a target link, and the value of a bit being 0 represents that a link corresponding to the bit is not the target link.

For example, the first bitmap includes 6 bits, which are denoted as B5 to B0, respectively corresponding to link 5 to link 0, and the links based on which the station multi-link device need to perform multi-link aggregation include the link 0 to the link 3. If STAs in the station multi-link device obtain TXOP ownerships of the link 0 and the link 3, but does not obtain TXOP ownerships of the link 1 and the link 2, the target link for which the station multi-link device is required to be assisted by the access point multi-link device in monitoring includes the link 1 and the link 2. In this case, when the station multi-link device generates first information, bits corresponding to the link 1 and the link 2 may be set to 1. That is to say, B1 and B2 are set to 1, and other bits are set to 0, so as to instruct the access point multi-link device to assist in monitoring link states of the link 1 and the link 2.

It should be understood that in the embodiments of the present disclosure, the station multi-link device transmits the first information over any communication frame for interacting with the access point multi-link device. There are no limits made thereto in the embodiments of the preset disclosure.

In some embodiments, the first information is contained in a first frame. The first frame is one of: a control wrapper frame, a management frame, and a data frame.

As an example, the data frame may be a Quality of Service (QoS) data frame, or a QoS Null frame.

It should be understood that the first information may be contained in any field including reserved bits or fields containing undefined values (or invalid values, reserved values) in any of the above frames as long as the number of reserved bits is sufficient to carry the first information. The specific position of the first information in the above frames is not limited in the present disclosure.

In the invention, the first information is contained in an aggregate (A) control subfield in a high throughput (HT) control field of the first frame.

For example, the A control subfield includes at least one of a control identification (ID) field or a first bitmap field. The control ID field is used for carrying the first indication information, and the first bitmap field is used for carrying the first bitmap.

In some embodiments, when a value of the control ID field is a first value, it represents that the first bitmap field is used for uplink multi-link aggregation. In this case, the first bitmap field is used for determining the at least one target link for which the station multi-link device is required to be assisted by the access point multi-link device in monitoring.

In some embodiments, the first value is a reserved value of the control ID field. As an example, the first value may be 0111.

In some embodiments, the number of bits occupied by the first bitmap field may be determined based on the maximum number of links corresponding to the multi-link aggregation. Each bit in the first bitmap field can correspond to a link, or a link ID, and the value of each bit is used for indicating whether the link corresponding to the bit is a target link for which the station multi-link device is required to be assisted by the access point multi-link device in monitoring.

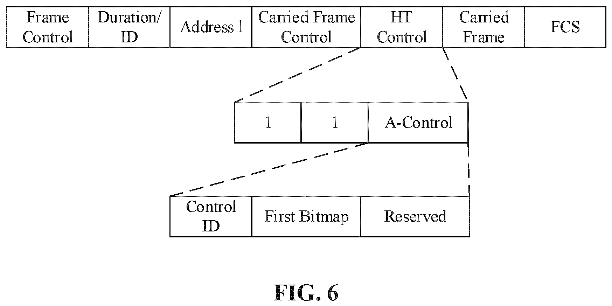

The manner in which the first information is carried in the frame will be described below in connection with the specific examples of the frame formats in FIG. 6 to FIG. 8.

FIG. 6 illustrates an example of a frame format of a control wrapper frame.

It should be understood that the frame format of the control wrapper frame in FIG. 6 is only an example, and the control wrapper frame may also be updated in the evolution of standards, in which case the carrying position of the first information in the control wrapper frame may also be adaptively adjusted. There are no limits made thereto in the embodiments of the preset disclosure.

As illustrated in FIG. 6, the control wrapper frame can include the following fields.

Frame Control, duration/ID, Address 1, Carried Frame Control, HT Control, Carried Frame and Frame Check Sequence (FCS).

In some embodiments, the number of bytes occupied by each of the above fields is 2, 2, 6, 2, 4, variable and 4 in sequence.

In some embodiments, a type value in the Frame Control field of the control wrapper frame is set to 01 and a subtype value is set to 0111.

As illustrated in FIG. 6, the HT Control field of the control wrapper frame can further include the A control subfield. As an example, the A control subfield may occupy the upper 30 bits of the 4 bytes of the HT Control field, e.g., B31 to B2.

In some embodiments, the first information may be carried in the A control subfield in the HT Control field of the control wrapper frame.

For example, the A control subfield can be set to include a control ID field and a first bitmap field.

As an example, the control ID field may include 4 bits (e.g., B5 to B2), the first bitmap field may include 6 bits (e.g., B11 to B6), or other number of bits. The number of bits may be determined based on the maximum number of target links required to be monitored. Hereinafter, the control ID field including 4 bits and the first bitmap field including 6 bits are taken as an example. There are no limits made thereto in the embodiments of the preset disclosure.

As an example, a value of the control ID field (i.e., B5 to B2) being "0111" represents that the first bitmap field (i.e., B11 to B6) is used for uplink multi-link aggregation, that is, contents carried in the first bitmap field (i.e., B11 to B6) are used for determining information of the target links for which the station multi-link device is required to be assisted by the access point multi-link device in monitoring.

For example, if the access point multi-link device receives the control wrapper frame and the control ID in the A control field is "0111", the access point multi-link device may parse the first bitmap field in the A control subfield and obtain the information of the target link. Otherwise, the access point multi-link device does not perform the operation of assisting the multi-link aggregation.

Alternatively, the A control subfield may further include a reserved field.

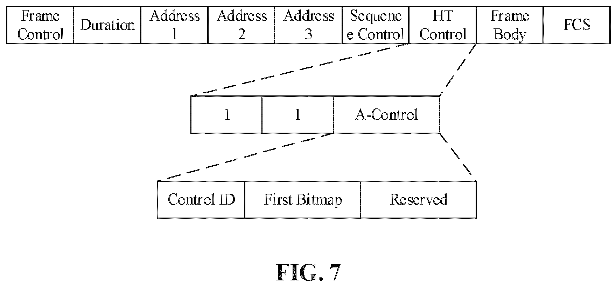

FIG. 7 illustrates an example of a frame format of a management frame.

It should be understood that the frame format of the management frame in FIG. 7 is only an example, and the management frame may also be updated in the evolution of standards, in which case the carrying position of the first information in the management frame can also be adaptively adjusted. There are no limits made thereto in the embodiments of the preset disclosure.

In some embodiments, the management frame may include an action frame, or may include other management frames. There are no limits made thereto in the embodiments of the preset disclosure.

As illustrated in FIG. 7, the management frame can include the following fields: Frame Control, duration/ID, Address 1, Address 2, Address 3, Sequence Control, HT Control, Frame Body and Frame Check Sequence (FCS). In some embodiments, the number of bytes occupied by each of the above fields is 2, 2, 6, 6, 6, 2, 4, variable and 4 in sequence.

In some embodiments, a type value in the Frame Control field of the management frame is set to 00 and a subtype value is set to 1101.

As illustrated in FIG. 7, the HT Control of the management frame can include the A control subfield.

As an example, the A control subfield may occupy the upper 30 bits of the 4 bytes of the HT Control filed, e.g., B31 to B2.

In some embodiments, the first information may be carried in an A control subfield in the HT Control field of the management frame.

For example, the A control subfield can be set to include a control ID field and a first bitmap field.

As an example, the control ID field may include 4 bits (e.g., B5 to B2), the first bitmap field may include 6 bits (e.g., corresponding to B11 to B6), or other number of bits. The number of bits may be determined based on the maximum number of target links required to be monitored. Hereinafter, the control ID field including 4 bits and the first bitmap field including 6 bits are taken as an example. There are no limits made thereto in the embodiments of the preset disclosure.

As an example, a value of the control ID field (i.e., B5 to B2) being "0111" represents that the first bitmap field (i.e., B11 to B6) is used for uplink multi-link aggregation, that is, contents carried in the first bitmap field (i.e., B11 to B6) are used for determining information of the target links for which the station multi-link device is required to be assisted by the access point multi-link device in monitoring.

For example, if the access point multi-link device receives the management frame and the control ID in the A control field is "0111", the access point multi-link device may parse the first bitmap field in the A control subfield and obtain the information of the target link. Otherwise, the access point multi-link device does not perform the operation of assisting the multi-link aggregation.

Alternatively, the A control subfield may further include a reserved field.

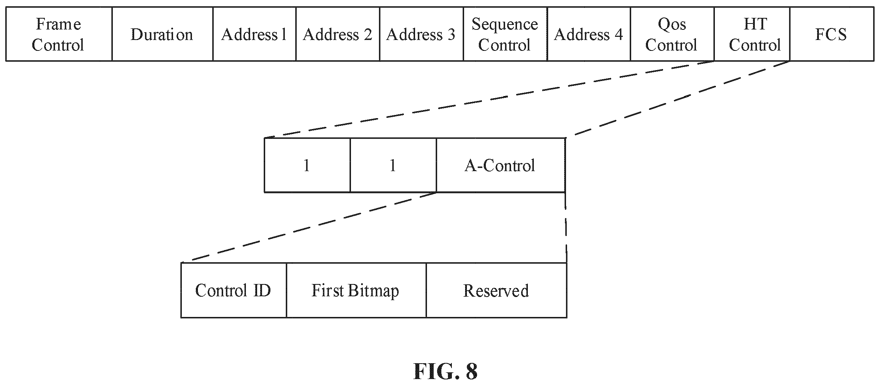

FIG. 8 illustrates an example of a frame format of a data frame.

It should be understood that the frame format of the data frame in FIG. 8 is only an example, and the data frame may also be updated in the evolution of standards, in which case the carrying position of the first information in the data frame can also be adaptively adjusted. There are no limits made thereto in the embodiments of the preset disclosure.

As illustrated in FIG. 8, the data frame can include the following fields.

Frame Control, duration/ID, Address 1, Address 2, Address 3, Sequence Control, Address 4, QoS Control, HT Control and FCS. As an example, the number of bytes occupied by each of the above fields is 2, 2, 6, 6, 6, 2, 6, 2, 4 and 4 in sequence.

In some embodiments, a type value in the Frame Control field of the data frame is set to 10 and a subtype value is set to 1000, so as to indicate that the data frame includes payloads.

In some embodiments, a type value in the Frame Control field of the data frame is set to 10 and a subtype value is set to 1100, so as to indicate that the data frame does not include payloads.

As illustrated in FIG. 8, the HT Control of the data frame can include the A control subfield.

As an example, the A control subfield may occupy the upper 30 bits of the 4 bytes of the HT Control, e.g., B31 to B2.

In some embodiments, the first information may be carried in an A control subfield in the HT Control field of the data frame.

For example, the A control subfield can be set to include a control ID field and a first bitmap field.

As an example, the control ID field may include 4 bits (e.g., B5 to B2), the first bitmap field may include 6 bits (e.g., corresponding to B11 to B6), or other number of bits. The number of bits may be determined based on the maximum number of target links required to be monitored. Hereinafter, the control ID field including 4 bits and the first bitmap field including 6 bits are taken as an example. There are no limits made thereto in the embodiments of the preset disclosure.

As an example, a value of the control ID field (i.e., B5 to B2) being "0111" represents that the first bitmap field (i.e., B11 to B6) is used for uplink multi-link aggregation, that is, contents carried in the first bitmap field (i.e., B11 to B6) are used for determining information of the target links for which the station multi-link device is required to be assisted by the access point multi-link device in monitoring.

For example, if the access point multi-link device receives the data frame and the control ID in the A control field is "0111", the access point multi-link device may parse the first bitmap field in the A control subfield and obtain the information of the target link. Otherwise, the access point multi-link device does not perform the operation of assisting the multi-link aggregation.

Alternatively, the A control subfield may further include a reserved field.

Correspondingly, as illustrated in FIG. 5, the access point multi-link device receives the first information transmitted by the station multi-link device. Further, in S302, the first information is parsed to obtain the information of the target link, and the target link is monitored to determine the link state of the target link. For example, whether the target link is idle or not is determined.

Further, the access point multi-link device may generate second information based on the link state of the target link.

In some embodiments, the first information is carried in the A control field in the HT Control field in the management frame, and the access point multi-link device may obtain the first information from the A control field in the HT Control field in the management frame. If the value of B5 to B2 in the A control field is 0111, the access point multi-link device can determine that contents carried in B11 to B6 is used for determining information of the target links for which the station multi-link device is required to be assisted by the access point multi-link device in monitoring, and the access point multi-link device further obtains information in B11 to B6. If the value of B11 to B6 is 000110, corresponding to link 5 to link 0 respectively, the access point multi-link device can determine that link 1 and link 2 are the target links required to be monitored.

For example, if the target link includes the link 2, and the link 2 corresponds to AP2 of the access point multi-link device, when a Network Allocation Vector (NAV) of the AP2 decreases to 0, the AP2 can start Point Interframe Space (PIFS) Energy Detection (ED), and if it is detected that the link 2 is in an idle state, the AP2 generates second information and transmits the second information to the station multi-link device. Otherwise, the AP2 continues the above operations after performing a normal EDCA mechanism.

In some embodiments of the present disclosure, as illustrated in FIG. 5, the method 300 further includes following operations.

At an operation S303, the station multi-link device receives second information transmitted by the access point multi-link device. The second information is used for indicating at least one link state of the at least one target link for which the station multi-link device is required to be assisted by the access point multi-link device in monitoring.

In some embodiments of the present disclosure, information of the at least one link state of the at least one target link can be indicated by a bitmap, or the second information can directly include the link ID of the target link and the information of the link state corresponding to the target link. The present disclosure does not specifically limit the indication mode of the link state of the target link.

It should be understood that the number of target links fed back by the second information may be the same as or may be different from the number of target links, for which the station multi-link device is required to be assisted by the access point multi-link device in monitoring, in the first information. For example, the access point multi-link device may only feedback link states of a portion of the links.

In some embodiments, if the at least one link state of the at least one target link for which the station multi-link device is required to be assisted by the access point multi-link device in monitoring is all busy, the access point multi-link device may not reply the second information to the station multi-link device.

In some embodiments of the present disclosure, the second information includes at least one of second indication information or a second bitmap. The second indication information is used for indicating whether the second information includes the information of the at least one link state of the at least one target link. The second bitmap includes a plurality of bits, each of the plurality of bits corresponds to at least one link, and different values of the bit are used for indicating whether a link corresponding to the bit is in an idle state.

As an example, the second indication information may be 1 bit, and the value of the 1 bit is used for indicating whether the second information includes the information of the at least one link state of the at least one target link. For example, the value of the 1 bit being 1 represents that the second information includes the information of the at least one link state of the at least one target link, and the value of the 1 bit being 0 represents that the second information does not include the information of the at least one link state of the at least one target link.

As an example, if the maximum number of links corresponding to the multi-link aggregation is M, the second bitmap may include M bits, each bit corresponds to a link, or each bit corresponds to a link ID, the value of each bit is used for indicating a link state of the link corresponding to the bit. For example, if a value of a bit is 1, it represents that a link state of a link corresponding to the bit is an idle state, and if the value of a bit is 0, it represents that a link state of a link corresponding to the bit is a busy state.

It should be understood that the number of bits corresponding to each link in the second bitmap may be determined based on the number of link states of each link. For example, if there are two link states, each link may correspond to one bit, or if there are more than two link states, each link may correspond to more than one bit. There are no limits made thereto in the embodiments of the preset disclosure.

For example, the second bitmap includes 6 bits, which are denoted as B5 to B0, respectively corresponding to link 5 to link 0. The at least one target link for which the station multi-link device is required to be assisted by the access point multi-link device in monitoring includes the link 1 and the link 2. If a link state of the link 1 is idle and a link state of the link 2 is busy, when the access point multi-link device generates the second information, B1 can be set to 1, B2 can be set to 0, and other bits are not processed (the default value of other bits can be 0). After obtaining the second information, the station multi-link device can parse the second information to obtain the link state corresponding to the target link, so as to perform multi-link aggregation transmission.

It should be understood that in the embodiments of the present disclosure, the access point multi-link device transmits the second information over any communication frame for interacting with the station multi-link device. There are no limits made thereto in the embodiments of the preset disclosure.

In some embodiments of the present disclosure, the second information is contained in a control frame or a management frame.

In some embodiments, the control frame includes a Block Acknowledgement (BA) frame or a control wrapper frame.

In some embodiments, the management frame includes an action frame.

It should be understood that the above examples of the control frame and the management frames are only examples and in other embodiments the second information may also be carried in other control frames or management frames. There are no limits made thereto in the embodiments of the preset disclosure.

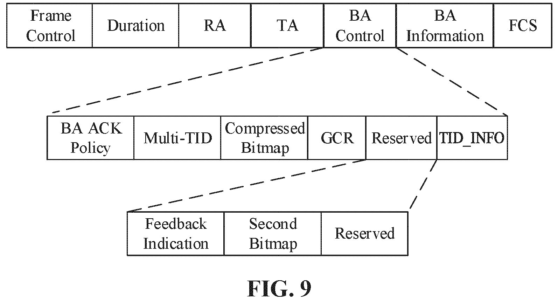

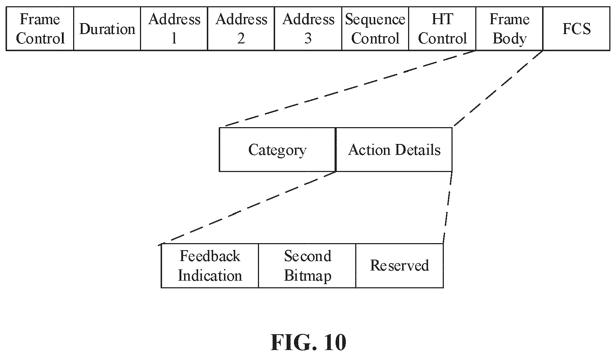

The manner in which the second information is carried in the frame will be described below in connection with the specific examples of the frame formats in FIG. 9 and FIG. 10.

FIG. 9 illustrates a frame format of a BA frame.

It should be understood that the frame format of the BA frame in FIG. 9 is only an example, and the BA frame may also be updated in the evolution of standards, in which case the carrying position of the second information in the BA frame may also be adaptively adjusted. There are no limits made thereto in the embodiments of the preset disclosure.

As illustrated in FIG. 9, the BA frame may include the following fields: Frame Control, duration, Receiver Address (RA), Transmitter Address (TA), BA Control, BA information and FCS.

In some embodiments, the number of bytes occupied by each of the above fields is 2, 2, 6, 6, 2, variable and 4 in sequence.

As illustrated in FIG. 9, the BA control field of the BA frame may further include the following subfields: BA Acknowledgement Policy (BA ACK Policy), Multi-TID, Compressed Bitmap, Groupcast with retries (GCR), Reserved and TID information (TID INFO). In some embodiments, the number of bits occupied by the above subfields is 1, 1, 1, 1, 8 and 4 in sequence. That is to say, the reserved subfield can occupy B11 to B4 in the BA control field.

In some embodiments, the second information may be carried in the reserved subfield in the BA control field of the BA frame.

For example, the reserved subfield may be set to include a feedback indication field and a second bitmap field. The feedback indication field is used for carrying the second indication information, and the second bitmap field is used for carrying the second bitmap.

As an example, the feedback indication field may include 1 bit (e.g., B4), the second bitmap field may include 6 bits (e.g., B10 to B5), or other number of bits. The number of bits may be determined based on the maximum number of target links required to be monitored. Hereinafter, the feedback indication field including 1 bit and the second bitmap field including 6 bits are taken as an example. There are no limits made thereto in the embodiments of the preset disclosure.

Alternatively, the reserved subfield can further include a reserved field.

As an example, a value of the feedback indication field (e.g., B4) being "1" represents that the second bitmap field (e.g., B10 to B5) includes information of link states of target links, or that contents carried in the second bitmap field (e.g., B10 to B5) are used for determining link states of target links, or that the BA frame includes information of link states of target links.

FIG. 10 illustrates a frame format of an action frame.

It should be understood that the frame format of the action frame in FIG. 10 is only an example, and the action frame may also be updated in the evolution of standards, in which case the carrying position of the second information in the action frame can also be adaptively adjusted. There are no limits made thereto in the embodiments of the preset disclosure.

As illustrated in FIG. 10, the action frame can include the following fields: Frame Control, duration/ID, Address 1, Address 2, Address 3, Sequence Control, HT Control, Frame Body and FCS. As an example, the number of bytes occupied by each of the above fields is 2, 2, 6, 6, 6, 2, 4, variable and 4.

In some embodiments, a type value in the Frame Control field of the action frame is set to 00, a subtype value is set to 1101, and a Category subfield is set to 00010110.

As illustrated in FIG. 10, the Frame Body field of the action frame can further include the following subfields: Category and action details. As an example, the number of bytes occupied by each of the above subfields is 1 and variable in sequence.

In some embodiments, the second information may be carried in the action details subfield in the Frame Body field of the action frame.

For example, the action details subfield may be set to include a feedback indication field and a second bitmap field. The feedback indication field is used for carrying the second indication information, and the second bitmap field is used for carrying the second bitmap.

As an example, the feedback indication field may include 1 bit (e.g., B4), the second bitmap field may include 6 bits (e.g., B10 to B5), or other number of bits. The number of bits may be determined based on the maximum number of target links required to be monitored. Hereinafter, the feedback indication field including 1 bit and the second bitmap field includes 6 bits as an example. There are no limits made thereto in the embodiments of the preset disclosure.

As an example, a value of the feedback indication field (e.g., B4) being "1" represents that the second bitmap field (e.g., B10 to B5) includes information of link states of target links, or that contents carried in the second bitmap field (e.g., B10 to B5) are used for determining link states of target links, or that the action frame includes information of link states of target links.

Alternatively, the action details subfield can further include a reserved field.

In some embodiments, the second information may be transmitted through a link of which TXOP ownership is obtained by the station multi-link device. For example, the station multi-link device includes an STA1 and an ST2, the STA1 obtains TXOP ownership of a link 1, the STA2 does not obtain TXOP ownership of a link 2, the STA1 may transmit first information to an AP1 in the access point multi-link device through the link 1 for instructing the access point multi-link device to assist in monitoring a link state of the link 2, and after the access point multi-link device determines the link state of the link 2, the AP1 may transmit second information through the link 1 for feedback of the link state of the link 2.

In other embodiments of the present disclosure, the access point multi-link device may also notify the station multi-link device of the link states of the target links through implicit information which may not include a second information field. Performing feedback in this way does not need to change the frame format.

In some embodiments, the implicit information is transmitted on a link of which TXOP ownership is not obtained by the station multi-link device (e.g., the link may include a link in an idle state in target links required to be monitored). For example, the station multi-link device includes an STA1 and an ST2, the STA1 obtains TXOP ownership of a link 1, the STA2 does not obtain TXOP ownership of a link 2, the STA1 may transmit first information to an AP1 in the access point multi-link device through the link 1 for instructing the access point multi-link device to assist in monitoring a link state of the link 2, and if the access point multi-link device determines that the link 2 is in an idle state, an AP2 may transmit implicit information through the link 2 for indicating that the link 2 is in an idle state.

In some embodiments, the implicit information may include a trigger frame or the implicit information may further include other frames that can implicitly indicate link states, such as data frames.

As an example, after receiving the first information, the access point multi-link device determines the link state of the target link in the first information, and further transmits a data frame on the target link in an idle state. If the station multi-link device receives the data frame replied by the access point multi-link device, the station multi-link device may determine that the target link used for transmitting the data frame is in an idle state.

In some embodiments, the trigger frame may include a MU-RTS.

Hereinafter, an example will be described in which the access point multi-link device feeds back, through the MU-RTS, to the station multi-link device at least one link state of at least one target link for which the station multi-link device is required to be assisted by the access point multi-link device in monitoring. There are no limits made thereto in the embodiments of the preset disclosure.

For example, the access point multi-link device may transmit the MU-RTS through a target link in an idle state. Thus, the station multi-link device can determine a link in an idle state based on the link through which the MU-RTS is received. In some embodiments, the MU-RTS is further used by the access point multi-link device to transfer TXOP ownership of the link transmitting the MU-RTS to the station multi-link device.

In some embodiments, the access point multi-link device may also transmit a CTS to self frame on a target link that is in an idle state, so as to notify other devices competing for the target link that the access point multi-link device has obtained TXOP ownership of the target link, and therefore preventing the target link from being occupied by other devices, and improving the success rate of multi-link aggregation.

Further, as illustrated in FIG. 5, the method 300 further includes an operation S304.

At the operation S304, the station multi-link device performs multi-link aggregation transmission based on the at least one link state indicated in the second information.

For example, the link in the idle state can be obtained by parsing the second information, and the multi-link aggregation transmission can be performed through the link in the idle state, thereby improving the system throughput.

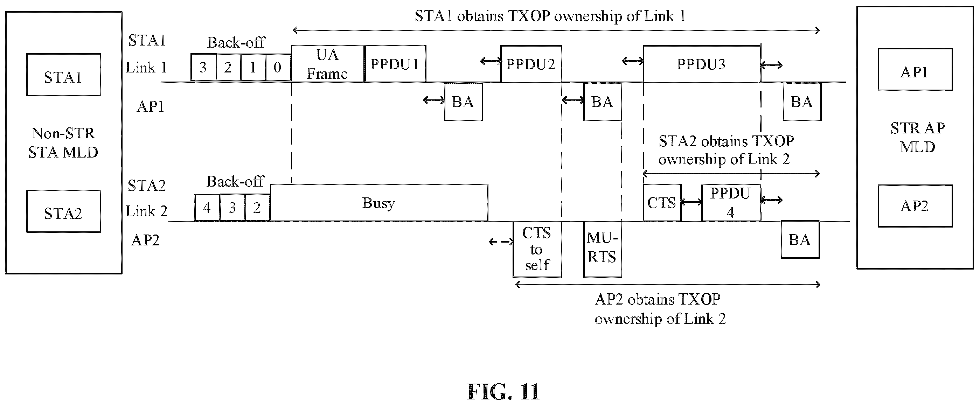

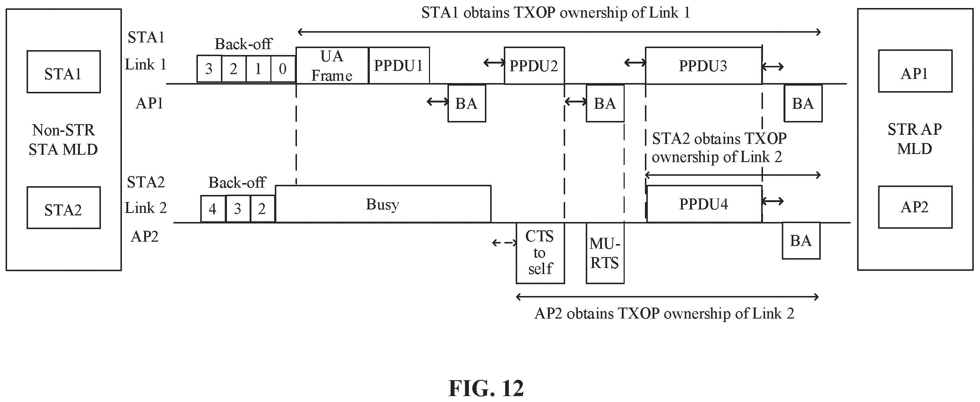

Taking the foregoing the first scenario as an example, the implementation process of the method of multi-link aggregation according to the detailed embodiments of the present disclosure will be explained in conjunction with FIG. 11 and FIG. 12.

The station multi-link device (Non-STR STA MLD) includes an STA1 and an STA2, the STA1 corresponds to a link 1 and the STA2 corresponds to a link 2, and the access point multi-link device (STR AP MLD) may include an AP1 and an AP2, the AP1 corresponds to link 1 and the AP2 corresponds to the link 2. The link 1 and the link 2 may correspond to the same frequency band or may correspond to different frequency bands.

The station multi-link device performs a normal EDCA contention mechanism on the link 1 and the link 2. When the BC of the station STA1 on the link 1 decreases to 0, it is found that the link 2 is occupied by other devices and the link 2 is in a busy state. If the station multi-link device continues to wait for the BC of another link to reach 0, the aforementioned problem will be caused. In this case, in the present disclosure embodiment, the station multi-link device can generate first information. The specific implementation of the first information is described with reference to the related description of the foregoing embodiments and will not be repeated here.

The STA1 obtains the TXOP ownership of the link 1. Further, the STA1 can transmit an uplink multi-link aggregation frame (denoted as a UA frame) to the access point multi-link device through the link 1. The UA frame includes the first information, and the UA frame can be any of frames in the foregoing embodiments for carrying the first information and the UA frame is used for requesting the access point multi-link device to assist in monitoring the link state of the link 2.

At the same time, the STA1 can also transmit PPDU data on the link 1 to the AP1. For example, the PPDU data may be PPDU1 and PPDU2. The AP1 can also reply the BA frame to the STA1 on the link 1.

After receiving the first information, the access point multi-link device can obtain, from the first information, the information of the link required to be monitored, and can further monitor the link 2 to determine the link state of the link 2. For example, if the link 2 is in an idle state, the AP1 can transmit second information to the STA1 through the link 1, or the AP2 can transmit implicit information (excluding the second information field) through the link 2. For example, the AP2 indicates that the link 2 is in an idle state by transmitting the MU-RTS through the link 2. Meanwhile, the AP2 transfers the TXOP ownership of the link 2 to the STA2, and the STA2 obtains the TXOP ownership of the link 2.

Alternatively, prior to transmitting the MU-RTS, the AP2 may first transmit the CTS to self frame on the link 2 for notifying other devices competing for the link 2 that the AP2 has obtained TXOP ownership of the link 2, so as to prevent the link 2 from being occupied by other devices.

In the embodiment of the present disclosure, after receiving the MU-RTS, the STA2 can transmitting the CTS frame on the link 2 as a reply, as illustrated in FIG. 11, or, the STA2 does not transmitting the CTS frame as a reply, as illustrated in FIG. 12.

Further, the station multi-link device may perform multi-link aggregation transmissions through the link 1 and the link 2. For example, PPDU3 is transmitted through the link 1 while PPDU4 is transmitted through the link 2.

In some embodiments of the present disclosure, the method further includes following operations.

The access point multi-link device determines, based on preamble related information in a first data unit, end time of the first data unit. The first data unit is received on a first link. The at least one of target link does not include the first link, and the second link is in the idle state during a time period of receiving the first data unit, or the second link is transformed from a busy state to the idle state during a time period of receiving the first data unit.

The access point multi-link device determines, based on the end time of the first data unit, at least one of the number of CTS to self frames to be transmitted or a mode of transmitting the CTS to self frame. End time of a last CTS to self frame is aligned with the end time of the first data unit.

Alternatively, the first link is a link of which TXOP ownership is obtained by the station multi-link device, and the TXOP ownership of the first link is obtained through an EDCA mechanism.

Alternatively, the transmission mode of the CTS to self frame can include the selected frame format, MCS, and whether physical layer padding is needed (for example, padding by using Signal extension field), etc.

As an example, as illustrated in FIG. 11 or FIG. 12, when the AP2 detects that the link 2 is in an idle state, the AP2 calculates, based on preamble-related information of the PPDU2, end time of the PPDU2, the number of CTS to self frames to be transmitted and a transmission mode of the CTS to self frame, so to ensure that the end time of the PPDU2 is aligned with the end time the CTS to self frames, and then the AP2 transmits the CTS to self frames.

For example, the access point multi-link device can determine, based on preamble related information of the PPDU2, end time of PPDU2; calculate, based on the end time of PPDU2, the number of CTS to self frames to be transmitted on the link 2 and a frame format, a modulation mode adopted by each CTS to self frame, and whether the Signal extension field is used for padding, etc., so as to ensure that the tail of PPDU2 and CTS to self frame are aligned at the end.

In some cases, if a difference of end times of the two PPDUs is less than or equal to 8 µs ((aSIFTime + aSignalExtension)/2), the end times of two PPDUs can be considered to be aligned. The aSIFSTime represents the time of Short Interframe Space and the aSignalExtension represents the time occupied by padding felids.

In some embodiments of the present disclosure, the method further includes following operations.

Based on a length of a block acknowledgement (BA) frame of the first data unit and a length of a multi-user request to send (MU-RTS), the BA frame and the MU-RTS are transmitted, so as to ensure that end time of the BA frame and end time of the MU-RTS are aligned.

As illustrated in FIG. 11 or FIG. 12, the BA frame transmitted by the access point multi-link device on the link 1 and the MU-RTS transmitted by the access point multi-link device on the link 2 also need to satisfy tail alignment.

As an implementation, a length of the BA frame is at least 22 bytes (including Frame Control, Duration, RA, TA, BA Control and FCS), and a length of the MU-RTS (including Frame Control, Duration, RA, TA, Padding and FCS) is at least 20 bytes, so the tail alignment of the BA and the MU-RTS at the end can be achieved (or guaranteed) by filling the Padding field.

To sum up, in the embodiment of the present disclosure, the station multi-link device is assisted by the access point multi-link device in monitoring links. In such a manner, the problem that the Non STR MLD cannot monitor link states of other links when transmitting or receiving data in one link is solved. Meanwhile, based on link states of other links for which the Non STR MLD is assisted by the access point multi-link device in monitoring, the Non STR MLD performs the multi-link aggregation, which improves the throughput of the system and the success rate of link aggregation.

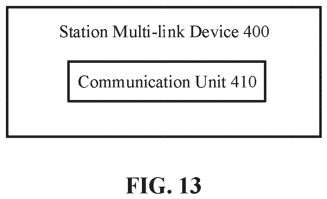

The method embodiments of the present disclosure are described in detail above with reference to FIG. 5 to FIG. 12, and the apparatus embodiments of the present disclosure are described in detail below with reference to FIG. 13 to FIG. 17. It should be understood that the apparatus embodiments and the method embodiments correspond to each other, and similar descriptions in the apparatus embodiments may refer to the method embodiments.

FIG. 13 illustrates a block diagram of a station multi-link device 400 according to an embodiment of the present disclosure. As illustrated in FIG. 13, the station multi-link device 400 includes a communication unit 410.

The communication unit 410 is configured to transmit first information to an access point multi-link device. The first information is used for determining at least one target link for which the station multi-link device is required to be assisted by the access point multi-link device in monitoring.

For example, the communication unit 410 is configured to transmit the first information on a link of which transmission opportunity (TXOP) ownership is obtained by the station multi-link device.

In some embodiments of the present disclosure, the TXOP ownership of the link is obtained through an enhanced distributed channel access (EDCA) mechanism.

In some embodiments of the present disclosure, the first information includes identification (ID) information of the at least one target link.

In some embodiments of the present disclosure, the ID information of the at least one target link is indicated by a bitmap.

In some embodiments of the present disclosure, the first information includes a first bitmap. The first bitmap includes a plurality of bits, each of the plurality of bits corresponds to at least one link, and different values of the bit are used for indicating whether at least one link corresponding to the bit is at least one target link for which the station multi-link device is required to be assisted by the access point multi-link device in monitoring.

In some embodiments of the present disclosure, the first information further includes first indication information. The first indication information is used for indicating that the at least one target link identified by the first bitmap is used for uplink multi-link aggregation.

In some embodiments of the present disclosure, the first information is contained in a first frame. The first frame is one of: a control wrapper frame, a management frame or a data frame.

In some embodiments of the present disclosure, the first information is contained in an aggregate (A) control subfield in a high throughput (HT) control field of the first frame.

In some embodiments of the present disclosure, the A control subfield includes at least one of a control identification (ID) field or a first bitmap field. A value of the control ID field being a first value represents that the first bitmap field is used for uplink multi-link aggregation, and the first bitmap field is used for determining the at least one target link for which the station multi-link device is required to be assisted by the access point multi-link device in monitoring.

In some embodiments of the present disclosure, the first value is a reserved value of the control ID field.

In some embodiments of the present disclosure, the communication unit 410 is further configured to receive second information transmitted by the access point multi-link device. The second information is used for indicating at least one link state of the at least one target link for which the station multi-link device is assisted by the access point multi-link device in monitoring.

In some embodiments of the present disclosure, information of the at least one link state of the at least one target link is represented by a bitmap.

In some embodiments of the present disclosure, the second information includes a second bitmap. The second bitmap includes a plurality of bits, each of the plurality of bits corresponds to at least one link, and different values of each bit are used for indicating whether at least one link corresponding to the bit is in an idle state.

In some embodiments of the present disclosure, the second information includes second indication information. The second indication information is used for indicating whether the second information includes the information of the at least one link state of the at least one target link.

In some embodiments of the present disclosure, the second information is contained in a control frame or a management frame.

In some embodiments of the present disclosure, the control frame includes a block acknowledgement (BA) frame or a control wrapper frame.

In some embodiments of the present disclosure, the second information is contained in a reserved subfield in a BA control field of the BA frame.

In some embodiments of the present disclosure, the reserved field includes a feedback indication field and a second bitmap field. The feedback indication field is used for indicating whether the BA frame includes information of the at least one link state of the at least one target link and the second bitmap field is used for the at least one link state of the at least one target link.

In some embodiments of the present disclosure, the management frame includes an action frame.

In some embodiments of the present disclosure, the second information is contained in an action details field in a frame body field of the action frame.

In some embodiments of the present disclosure, the action details field includes at least one of a feedback indication field or a second bitmap field. The feedback indication field is used for indicating whether the action frame includes information of the at least one link state of the at least one target link, and the second bitmap field is used for determining the at least one link state of the at least one target link.

In some embodiments of the present disclosure, the communication unit 410 is further configured to receive a trigger frame transmitted by the access point multi-link device. The trigger frame is used for determining at least one link state of the at least one target link for which the station multi-link device is assisted by the access point multi-link device in monitoring.

In some embodiments of the present disclosure, the station multi-link device further includes a processing unit.

The processing unit is used for determining that a link receiving the trigger frame is in an idle state.

In some embodiments of the present disclosure, the trigger frame includes a multi-user request to send (MU-RTS). The MU-RTS is further used for the access point multi-link device to transfer to the station multi-link device transmission opportunity (TXOP) ownership of the link for transmitting the MU-RTS.

In some embodiments of the present disclosure, the communication unit 410 is further configured to perform multi-link aggregation transmission based on at least one link state of the at least one target link.

In some embodiments of the present disclosure, the station multi-link device further includes a processing unit.

The processing unit is configured to generate the first information and to parse the second information to obtain the at least one link state of the at least one target link.

To sum up, in the embodiment of the present disclosure, the station multi-link device is assisted by the access point multi-link device in monitoring links. In such a manner, the problem that the Non STR MLD cannot monitor link states of other links when transmitting or receiving data in one link is solved. Meanwhile, based on link states of other links for which the Non STR MLD is assisted by the access point multi-link device in monitoring, the Non STR MLD performs the multi-link aggregation, which improves the throughput of the system and the success rate of link aggregation.

Alternatively, in some embodiments, the communication unit may be a communication interface, transceiver, or an input/output interface of a communication chip or a system-on-chip. The processing unit may be one or more processors.

It should be understood that the station multi-link device 400 according to an embodiment of the present disclosure may correspond to the station multi-link device in an embodiment of the method of the present disclosure, and the above and other operations and/or functions of each unit in the station multi-link device 400 are used for implementing corresponding procedures of the access point multi-link device in the method 300 illustrated in FIG. 5 to FIG. 12. For the sake of brevity, details are not repeated here.

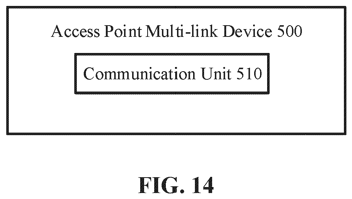

FIG. 14 illustrates a block diagram of an access point multi-link device 500 according to an embodiment of the present disclosure. As illustrated in FIG. 13, the access point multi-link device 500 includes a communication unit 510.

The communication unit 510 is configured to receive first information transmitted by a station multi-link device. The first information is used for determining at least one target link for which the station multi-link device is required to be assisted by the access point multi-link device in monitoring.

In some embodiments of the present disclosure, the access point multi-link device 500 further includes a processing unit.

The processing unit is configured to parse the first information to obtain information of the at least one target link in the first information.

In some embodiments of the present disclosure, the access point multi-link device 500 further includes a storage unit.

The storage unit is configured to store the information of the at least one target link, such as, ID information of the at least one target link.

In some embodiments of the present disclosure, the access point multi-link device further includes the processing unit.

The processing unit is configured to monitoring the at least one target link based on the first information to determine the at least one link state of the at least one target link.

In some embodiments of the present disclosure, the first information includes a first bitmap. The first bitmap includes a plurality of bits, each of the plurality of bits corresponds to at least one link, and different values of the bit are used for indicating whether at least one link corresponding to the bit is at least one target link for which the station multi-link device is required to be assisted by the access point multi-link device in monitoring.

In some embodiments of the present disclosure, the first information is contained in a first frame. The first frame is one of: a control wrapper frame, a management frame or a data frame.

In some embodiments of the present disclosure, the first information is contained in an aggregate (A) control subfield in a high throughput (HT) control field of the first frame.

In some embodiments of the present disclosure, the A control subfield includes at least one of a control identification (ID) field or a first bitmap field. A value of the control ID field being a first value represents that the first bitmap field is used for uplink multi-link aggregation, and the first bitmap field is used for determining the at least one target link for which the station multi-link device is required to be assisted by the access point multi-link device in monitoring.

For example, if the communication unit 510 receives one of the control wrapper frame, the action frame, and the data frame, and the control ID in the A control field is "0111", the first bitmap field can be parsed to obtain the information of the at least one target link. Otherwise, the communication unit 510 does not perform the operation of assisting the multi-link aggregation.

In some embodiments of the present disclosure, the communication unit 510 is further configured to transmit second information to the station multi-link device. The second information is used for indicating at least one link state of the at least one target link for which the station multi-link device is assisted by the access point multi-link device in monitoring.

In some embodiments of the present disclosure, information of the at least one link state of the at least one target link is represented by a bitmap.

In some embodiments of the present disclosure, the second information includes a second bitmap. The second bitmap includes a plurality of bits, each of the plurality of bits corresponds to at least one link, and different values of each bit are used for indicating whether at least one link corresponding to the bit is in an idle state.

In some embodiments of the present disclosure, the second information is contained in a control frame or a management frame.

In some embodiments of the present disclosure, the control frame includes a block acknowledgement (BA) frame or a control wrapper frame.

In some embodiments of the present disclosure, the second information is contained in a reserved subfield in a BA control field of the BA frame.

In some embodiments of the present disclosure, the reserved field includes a feedback indication field and a second bitmap field. The feedback indication field is used for indicating whether the BA frame includes information of the at least one link state of the at least one target link and the second bitmap field is used for the at least one link state of the at least one target link.

In some embodiments of the present disclosure, the management frame includes an action frame.

In some embodiments of the present disclosure, the second information includes an action details field in a frame body field of the action frame.

In some embodiments of the present disclosure, the action details field includes at least one of a feedback indication field or a second bitmap field. The feedback indication field is used for indicating whether the action frame includes information of the at least one link state of the at least one target link, and the second bitmap field is used for determining the at least one link state of the at least one target link.

In some embodiments of the present disclosure, the communication unit 510 is further configured to transmit a trigger frame to the station multi-link device. The trigger frame is used for indicating at least one link state of the at least one target link.

In some embodiments of the present disclosure, the trigger frame includes a multi-user request to send (MU-RTS). The MU-RTS is further used for the access point multi-link device to transfer to the station multi-link device transmission opportunity (TXOP) ownership of the link for transmitting the MU-RTS.

In some embodiments of the present disclosure, the communication unit 510 is further configured to transmit a clear to send (CTS) to self frame on a second link. The second link is the target link in an idle state.

In some embodiments of the present disclosure, the access point multi-link device 500 further includes a processing unit.

The processing unit is used for determining, based on preamble related information in a first data unit, end time of the first data unit. The first data unit is received on a first link, the at least one of target link does not include the first link. The second link is in the idle state during a time period of receiving the first data unit, or the second link is transformed from a busy state to the idle state during a time period of receiving the first data unit.

The processing unit is further configured to determine, based on the end time of the first data unit, at least one of the number of CTS to self frames to be transmitted or a mode of transmitting the CTS to self frame. End time of a last CTS to self frame is aligned with the end time of the first data unit.

In some embodiments of the present disclosure, the first link is a link of which transmission opportunity (TXOP) ownership is obtained by the station multi-link device, and the TXOP ownership of the first link is obtained through an enhanced distributed channel access (EDCA) mechanism.

In some embodiments of the present disclosure, the access point multi-link device 500 further includes a processing unit.

The processing unit is configured to: based on a length of a block acknowledgement (BA) frame of the first data unit and a length of a multi-user request to send (MU-RTS), transmit the BA frame and the MU-RTS. End time of the BA frame is aligned with end time of the MU-RTS.

Alternatively, in some embodiments, the communication unit may be a communication interface, a transceiver, or an input/output interface of a communication chip or a system-on-chip. The processing unit may be one or more processors.

It should be understood that, the access point multi-link device 500 according to embodiments of the present disclosure may correspond to the access point multi-link device in the method embodiments of the present disclosure, and the above and other operations and/or functions of each unit in the access point multi-link device 500 are used for implementing corresponding procedures of the access point multi-link device in the method 300 illustrated in FIG. 5 to FIG. 12. For the sake of brevity, details are not repeated here.

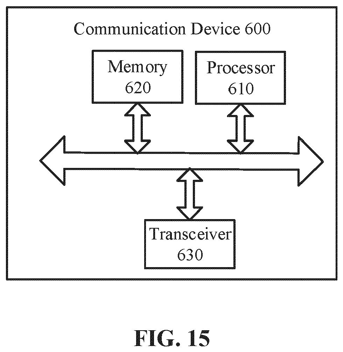

FIG. 15 illustrates a structural diagram of a communication device 600 provided by an embodiment of the present disclosure. The communication device 600 illustrated in FIG. 15 includes a processor 610 configured to invoke a computer program from a memory and execute the computer program to implement the method in the embodiments of the present disclosure.

Alternatively, as illustrated in FIG. 15, the communication device 600 may further include a memory 620. A processor 610 configured to invoke a computer program from the memory 620 and execute the computer program to implement the method in the embodiments of the present disclosure.

The memory 620 may be a separate device independent of the processor 610 or may be integrated in the processor 610.

Alternatively, as illustrated in FIG. 15, the communication device 600 may further include a transceiver 630. The processor 610 may control the transceiver 630 to communicate with other devices. In particular, the processor 610 may control the transceiver 630 to transmit information or data to the other devices or receive information or data transmitted by the other devices.

The transceiver 630 may include a transmitter and a receiver. The transceiver 630 may further include antennas, the number of which may be one or more.

Alternatively, the communication device 600 may be specifically the access point multi-link device of the embodiment of the present disclosure, and the communication device 600 may implement corresponding procedures implemented by the access point multi-link device in each method of the embodiment of the present disclosure. For the sake of brevity, details are not repeated here. For example, the transceiver 630 may correspond to a communication unit 510 in the access point multi-link device 500 and the processor 610 may correspond to a processing unit in the access point multi-link device 500.

Alternatively, the communication device 600 may be specifically the station multi-link device of the embodiment of the present disclosure, and the communication device 600 may implement corresponding procedures implemented by the station multi-link device in each method of the embodiment of the present disclosure. For the sake of brevity, details are not repeated here. For example, the transceiver 630 may correspond to a communication unit 410 in the station multi-link device 400 and the processor 610 may correspond to a processing unit in the station multi-link device 400.

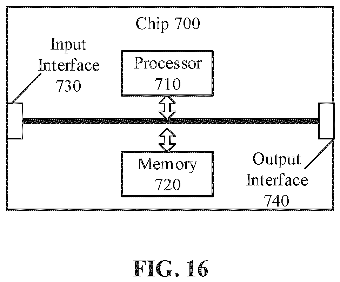

FIG. 16 illustrates a structural diagram of a chip according to an embodiment of the present disclosure. A chip 700 illustrated in FIG. 16 includes a processor 710 configured to invoke a computer program from a memory and execute the computer program to implement the method in the embodiments of the present disclosure.

Alternatively, as illustrated in FIG. 16, the chip 700 may further include a memory 720. A processor 710 may invoke a computer program from the memory 720 and execute the computer program to implement the method in the embodiments of the present disclosure.

The memory 720 may be a separate device independent of the processor 710 or may be integrated in the processor 710.

Alternatively, the chip 700 may further include an input interface 730. The processor 710 may control the input interface 730 to communicate with other devices or chips. In particular, the processor 710 may control the input interface 730 to obtain information or data transmitted by the other devices or the chips.

Alternatively, the chip 700 may further include an output interface 740. The processor 710 may control the output interface 740 to communicate with other devices or chips. In particular, the processor 710 may control the output interface 740 to output information or data to the other devices or the chips.

Alternatively, the chip can be applied to the access point multi-link device in the embodiment of the present disclosure, and the chip can implement corresponding procedures implemented by the access point multi-link device in each method of the embodiment of the present disclosure. For the sake of brevity, details are not repeated here.

Alternatively, the chip can be applied to the station multi-link device in the embodiment of the present disclosure, and the chip can implement corresponding procedures implemented by the station multi-link device in each method of the embodiment of the present disclosure. For the sake of brevity, details are not repeated here.

It should be understood that the chip referred to in the embodiments of the present disclosure may also be referred to as a chip at system level, a system chip, a chip system, a system-on-chip or the like.

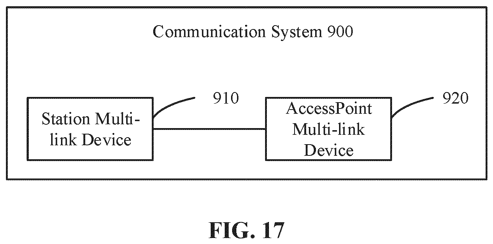

FIG. 17 illustrates a block diagram of a communication system 900 provided by an embodiment of the present disclosure. As illustrated in FIG. 17, the communication system 900 includes a station multi-link device 910 and an access point multi-link device 920.

The station multi-link device 910 may be used to implement the corresponding functions implemented by the station multi-link device in the above method, and the access point multi-link device 920 may be used to implement the corresponding functions implemented by the access point multi-link device in the above method. For the sake of brevity, details are not repeated here.

It should be understood that the processor of the embodiment of the present disclosure may be an integrated circuit chip with signal processing capability. In the implementation process, the operations of the foregoing method embodiments may be completed by indications in the form of software or the integrated logic circuits of the hardware in the processor. The above-mentioned processor may be a general-purpose processor, a digital signal processor (DSP), an application specific integrated circuit (ASIC), a field programmable gate array (FPGA) or other programming logic devices, discrete gates or transistor logic devices, or discrete hardware components. The methods, operations, and logical block diagrams disclosed in the embodiments of the present disclosure may be implemented or executed. The general-purpose processor may be a microprocessor or the processor may further be any conventional processor or the like. The operations of the method disclosed in the embodiments of the present disclosure may be directly embodied as being executed and completed by a hardware decoding processor, or executed and completed by a combination of hardware and software modules in the decoding processor. The software module may be located in a mature storage medium in the field such as a random access memory, a flash memory, a read-only memory, a programmable read-only memory, or an electrically erasable programmable memory or a register. The storage medium is located in the memory, and the processor reads the information in the memory and completes the operations of the above-mentioned method in combination with its hardware.

It can be understood that the memory in the embodiment of the present disclosure may be a volatile memory or a non-volatile memory, or may include both volatile and non-volatile memory. Among them, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. By way of exemplary but not restrictive description, many forms of RAM are available, such as static RAMs (SRAM), dynamic RAMs (DRAM), synchronous DRAMs (SDRAM), double data rate SDRAMs (DDR SDRAM), enhanced SDRAMs (ESDRAM), synchlink DRAMs (SLDRAM)) and direct rambus RAMs (DR RAM). It should be noted that the memories of the systems and methods described herein are intended to include, but are not limited to these and any other suitable types of memory.

It should be understood that the foregoing memory is exemplary but not restrictive. For example, the memory in the embodiment of the present disclosure may further be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) or a direct rambus RAM (DR RAM), etc. That is to say, the memory in the embodiments of the present disclosure is intended to include but is not limited to these and any other suitable types of memory.

A non-claimed embodiment of the present disclosure further provides a computer-readable storage medium for storing computer programs.

Alternatively, the computer program product may be applied to the access point multi-link device in the embodiment of the present disclosure, and the computer program instructions cause a computer to execute the corresponding procedures implemented by the access point multi-link device in each method of the embodiment of the present disclosure. For the sake of brevity, details are not repeated here.

Alternatively, the computer program product may be applied to the station multi-link device in the embodiment of the present disclosure, and the computer program instructions cause a computer to execute the corresponding procedures implemented by the station multi-link device in each method of the embodiment of the present disclosure. For the sake of brevity, details are not repeated here.

A non-claimed embodiment of the present disclosure further provides a computer program product including computer program instructions.

Alternatively, the computer program product may be applied to the access point multi-link device in an embodiment of the present disclosure, and the computer program instructions cause a computer to execute corresponding procedures implemented by the access point multi-link device in each method of the embodiment of the present disclosure. For the sake of brevity, details are not repeated here.

Alternatively, the computer program product may be applied to the station multi-link device in an embodiment of the present disclosure, and the computer program instructions cause a computer to execute corresponding procedures implemented by the station multi-link device in each method of the embodiment of the present disclosure. For the sake of brevity, details are not repeated here.

A non-claimed embodiment of the present disclosure further provides a computer program.

Alternatively, the computer program may be applied to the access point multi-link device in an embodiment of the present disclosure, and when the computer program is run on a computer, causes the computer to execute the corresponding procedures implemented by the access point multi-link device in each method of the embodiment of the present disclosure. For the sake of brevity, details are not repeated here.

Alternatively, the computer program can be applied to the station multi-link device in the embodiment of the present disclosure, and when the computer program is run on a computer, causes the computer to execute the corresponding procedures implemented by the station multi-link device in each method of the embodiment of the present disclosure. For the sake of brevity, details are not repeated here.

Those of ordinary skill in the art may be aware that the units and algorithm operations of the examples described in the embodiments disclosed herein may be implemented by electronic hardware or a combination of computer software and electronic hardware. Whether these functions are executed by hardware or software depends on the specific application and design constraints of the technical solution. Professionals and technicians can use different methods to implement the described functions of each specific application, but such implementation should not be considered beyond the scope of the present disclosure.

Those skilled in the art may clearly understand that, for the convenience and conciseness of the description, the specific working process of the above-described system, apparatus and unit may refer to the corresponding procedures in the foregoing method embodiments, which will not be repeated here.

In the several embodiments provided by the present disclosure, it should be understood that the disclosed system, apparatus and method may be implemented in other ways. For example, the apparatus embodiments described above are only illustrative. For example, the division of the units is only a logical function division, and there may be other divisions in actual implementation. For example, multiple units or components may be combined or integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the present embodiments.

In addition, the functional units in each embodiment of the present disclosure may be integrated into one processing unit, or each unit may exist separately and physically, or two or more units may be integrated into one unit.

If the function is implemented in the form of a software functional unit and is sold or used as an independent product, it can be stored in a computer readable storage medium. Based on such an understanding, the technical solutions of the present disclosure or the part that contributes to the related art or the part of the technical solutions may be embodied in the form of a software product essentially, and the computer software product is stored in a storage medium including several indications to make a computer device (which may be a personal computer, a server or a network device, etc.) execute all or part of the operations of the methods described in the each embodiment of the present disclosure. The aforementioned storage medium includes: U disks, mobile hard disks, read-only memories (ROM), random access memories (RAM), magnetic disks or optical disks and other media that can store program codes.

The foregoing is only the specific implementation mode of the present disclosure. However, the protection scope of the present disclosure is not limited thereto. The protection scope of the present disclosure shall be subject to the protection scope of the claims.

## Claims

1. A method of link monitoring, **characterized by** comprising:
transmitting (S301), by a station multi-link device, first information to an access point multi-link device, wherein the first information is used for determining at least one target link that the access point multi-link device is required to assist the station multi-link device in monitoring,
wherein the first information comprises identification, ID, information of the at least one target link and the ID information of the at least one target link is indicated by a bitmap,
wherein the first information is contained in an aggregate, A, control subfield in a high throughput, HT, control field of a first frame, wherein the first frame is one of: a control wrapper frame, a management frame or a data frame.

2. The method of claim 1, wherein if the at least one target link is in an idle state, the station multi-link device changing from a doze state to a wake state performs uplink multi-link aggregation after receiving feedback information from the access point multi-link device.

3. The method of claim 1, wherein the first information comprises a first bitmap, wherein the first bitmap comprises a plurality of bits, each of the plurality of bits corresponds to at least one link, and different values of each bit are used for indicating whether at least one link corresponding to the bit is at least one target link that the access point multi-link device is required to assist the station multi-link device in monitoring.

4. The method of claim 3, wherein the first information further comprises first indication information, wherein the first indication information is used for indicating that the at least one target link identified by the first bitmap is used for uplink multi-link aggregation.

5. The method of claim 1, wherein the A control subfield comprises at least one of a control identification, ID, field or a first bitmap field, wherein a value of the control ID field being a first value represents that the first bitmap field is used for uplink multi-link aggregation, and the first bitmap field is used for determining the at least one target link that the access point multi-link device is required to assist the station multi-link device in monitoring.

6. The method of any one of claims 1 to 5, further comprising:
receiving, by the station multi-link device, a trigger frame transmitted by the access point multi-link device, wherein the trigger frame is used for determining at least one link state of the at least one target link that the access point multi-link device is required to assist the station multi-link device in monitoring.

7. A method of link monitoring, **characterized by** comprising:
receiving (S301), by an access point multi-link device, first information transmitted by a station multi-link device, wherein the first information is used for determining at least one target link that the access point multi-link device is required to assist the station multi-link device in monitoring,
wherein the first information comprises identification, ID, information of the at least one target link and the ID information of the at least one target link is indicated by a bitmap,
wherein the first information is contained in an aggregate, A, control subfield in a high throughput, HT, control field of a first frame, and the first frame is one of: a control wrapper frame, a management frame or a data frame.

8. The method of claim 7, further comprising:
transmitting feedback information to the station multi-link device.

9. The method of claim 7, wherein the first information comprises a first bitmap, wherein the first bitmap comprises a plurality of bits, each of the plurality of bits corresponds to at least one link, and different values of each bit are used for indicating whether at least one link corresponding to the bit is at least one target link that the access point multi-link device is required to assist the station multi-link device in monitoring.

10. The method of claim 7, wherein the A control subfield comprises at least one of a control identification, ID, field or a first bitmap field, wherein a value of the control ID field being a first value represents that the first bitmap field is used for uplink multi-link aggregation, and the first bitmap field is used for determining the at least one target link that the access point multi-link device is required to assist the station multi-link device in monitoring.

11. The method of any one of claims 7 to 10, further comprising:
transmitting, by the access point multi-link device, a trigger frame to the station multi-link device, wherein the trigger frame is used for indicating at least one link state of the at least one target link.

12. A station multi-link device, comprising: a processor; and a memory for storing a computer program, wherein the processor is configured to invoke and execute the computer program stored in the memory to perform the method of any one of claims 1 to 6.

13. An access point multi-link device, comprising: a processor; and a memory for storing a computer program, wherein the processor is configured to invoke and execute the computer program stored in the memory to perform the method of any one of claims 7 to 11.

## Patentansprüche

1. Verfahren zur Link-Überwachung, **dadurch gekennzeichnet, dass** es Folgendes umfasst:
Übertragen (S301), durch eine Stations-Multi-Link-Vorrichtung, von ersten Informationen an eine Zugangspunkt-Multi-Link-Vorrichtung, wobei die ersten Informationen verwendet werden zum Bestimmen mindestens eines Ziel-Links, für dessen Überwachung die Zugangspunkt-Multi-Link-Vorrichtung der Stations-Multi-Link-Vorrichtung helfen muss,
wobei die ersten Informationen Identifikationsinformationen bzw. ID-Informationen von dem mindestens einen Ziel-Link umfassen und die ID-Informationen des mindestens einen Ziel-Links durch eine Bitmap angegeben werden,
wobei die ersten Informationen in einem Aggregat-Steuersubfeld bzw. A-Steuersubfeld in einem Hochdurchsatz-Steuerfeld bzw. HT-Steuerfeld eines ersten Frames enthalten sind, wobei der erste Frame einer ist von: einem Steuerungswrapperframe, einem Managementframe oder einem Datenframe.

2. Verfahren nach Anspruch 1, wobei, falls sich der mindestens eine Ziel-Link in einem Ruhezustand befindet, die Stations-Multi-Link-Vorrichtung, die von einem Döszustand in einen Wachzustand wechselt, Uplink-Multi-Link-Aggregation durchführt, nachdem Rückmeldungsinformationen von der Zugangspunkt-Multi-Link-Vorrichtung empfangen wurden.

3. Verfahren nach Anspruch 1, wobei die ersten Informationen eine erste Bitmap umfassen, wobei die erste Bitmap eine Vielzahl von Bits umfasst, wobei jedes aus der Vielzahl von Bits mit mindestens einem Link korrespondiert, und unterschiedliche Werte von jedem Bit verwendet werden zum Angeben, ob mindestens ein Link, dem Bit korrespondierend, mindestens ein Ziel-Link ist, für dessen Überwachung die Zugangspunkt-Multi-Link-Vorrichtung der Stations-Multi-Link-Vorrichtung helfen muss.

4. Verfahren nach Anspruch 3, wobei die ersten Informationen ferner erste Angabeinformationen umfassen, wobei die ersten Angabeinformationen verwendet werden zum Angeben, dass der mindestens eine Ziel-Link, identifiziert durch die erste Bitmap, für Uplink-Multi-Link-Aggregation verwendet wird.

5. Verfahren nach Anspruch 1, wobei das A-Steuersubfeld ein Steuerungsidentifikationsfeld bzw. Steuerungs-ID-Feld oder ein erstes Bitmapfeld umfasst, wobei ein Wert des Steuerungs-ID-Felds, der ein erster Wert ist, darstellt, dass das erste Bitmapfeld für Uplink-Multi-Link-Aggregation verwendet wird, und wobei das erste Bitmapfeld verwendet wird zum Bestimmen des mindestens einen Ziel-Links, für dessen Überwachung die Zugangspunkt-Multi-Link-Vorrichtung der Stations-Multi-Link-Vorrichtung helfen muss.

6. Verfahren nach einem der Ansprüche 1 bis 5, ferner umfassend:
Empfangen, durch die Stations-Multi-Link-Vorrichtung, eines Triggerframes, der durch die Zugangspunkt-Multi-Link-Vorrichtung übertragen wurde, wobei die ersten Informationen verwendet werden zum Bestimmen mindestens eines Ziel-Links, für dessen Überwachung die Zugangspunkt-Multi-Link-Vorrichtung der Stations-Multi-Link-Vorrichtung helfen muss.

7. Verfahren zur Link-Überwachung, **dadurch gekennzeichnet, dass** es Folgendes umfasst:
Empfangen (S301), durch eine Zugangspunkt-Multi-Link-Vorrichtung, von ersten Informationen, die durch eine Stations-Multi-Link-Vorrichtung übertragen wurden, wobei die ersten Informationen verwendet werden zum Bestimmen mindestens eines Ziel-Links, für dessen Überwachung die Zugangspunkt-Multi-Link-Vorrichtung der Stations-Multi-Link-Vorrichtung helfen muss,
wobei die ersten Informationen Identifikationsinformationen bzw. ID-Informationen von dem mindestens einen Ziel-Link umfassen und die ID-Informationen des mindestens einen Ziel-Links durch eine Bitmap angegeben werden,
wobei die ersten Informationen in einem Aggregat-Steuersubfeld bzw. A-Steuersubfeld in einem Hochdurchsatz-Steuerfeld bzw. HT-Steuerfeld eines ersten Frames enthalten sind, und wobei der erste Frame einer ist von: einem Steuerungswrapperframe, einem Managementframe oder einem Datenframe.

8. Verfahren nach Anspruch 7, ferner umfassend:
Übertragen von Rückmeldungsinformationen an die Stations-Multi-Link-Vorrichtung.

9. Verfahren nach Anspruch 7, wobei die ersten Informationen eine erste Bitmap umfassen, wobei die erste Bitmap eine Vielzahl von Bits umfasst, wobei jedes aus der Vielzahl von Bits mit mindestens einem Link korrespondiert, und unterschiedliche Werte von jedem Bit verwendet werden zum Angeben, ob mindestens ein Link, dem Bit korrespondierend, mindestens ein Ziel-Link ist, für dessen Überwachung die Zugangspunkt-Multi-Link-Vorrichtung der Stations-Multi-Link-Vorrichtung helfen muss.

10. Verfahren nach Anspruch 7, wobei das A-Steuersubfeld ein Steuerungsidentifikationsfeld bzw. Steuerungs-ID-Feld oder ein erstes Bitmapfeld umfasst, wobei ein Wert des Steuerungs-ID-Felds, der ein erster Wert ist, darstellt, dass das erste Bitmapfeld für Uplink-Multi-Link-Aggregation verwendet wird, und wobei das erste Bitmapfeld verwendet wird zum Bestimmen des mindestens einen Ziel-Links, für dessen Überwachung die Zugangspunkt-Multi-Link-Vorrichtung der Stations-Multi-Link-Vorrichtung helfen muss.

11. Verfahren nach einem der Ansprüche 7 bis 10, ferner umfassend:
Übertragen, durch die Zugangspunkt-Multi-Link-Vorrichtung, eines Triggerframes an die Stations-Multi-Link-Vorrichtung, wobei der Triggerframe verwendet wird zum Angeben mindestens eines Link-Zustands des mindestens einen Ziel-Links.

12. Stations-Multi-Link-Vorrichtung, umfassend: einen Prozessor und einen Speicher zum Speichern eines Computerprogramms, wobei der Prozessor ausgelegt ist zum Aufrufen und Ausführen des in dem Speicher gespeicherten Computerprogramms, um das Verfahren nach einem der Ansprüche 1 bis 6 durchzuführen.

13. Zugangspunkt-Multi-Link-Vorrichtung, umfassend: einen Prozessor und einen Speicher zum Speichern eines Computerprogramms, wobei der Prozessor ausgelegt ist zum Aufrufen und Ausführen des in dem Speicher gespeicherten Computerprogramms, um das Verfahren nach einem der Ansprüche 7 bis 11 durchzuführen.

## Revendications

1. Procédé de surveillance de liaisons, **caractérisé en ce qu'**il comprend l'étape suivante :
transmettre (S301), par un dispositif à liaisons multiples de station, des premières informations à un dispositif à liaisons multiples de point d'accès, les premières informations étant utilisées pour déterminer au moins une liaison cible pour la surveillance de laquelle le dispositif à liaisons multiples de point d'accès doit aider le dispositif à liaisons multiples de station,
où les premières informations comprennent des informations d'identification, ID, relatives à l'au moins une liaison cible, et les informations d'identification de l'au moins une liaison cible sont indiquées par une image matricielle,
où les premières informations sont contenues dans un sous-champ de contrôle agrégé, A, au sein d'un champ de contrôle à haut débit, HT, d'une première trame, ladite première trame étant l'une parmi : une trame de contrôle d'enveloppe, une trame de gestion ou une trame de données.

2. Procédé selon la revendication 1, dans lequel, si l'au moins une liaison cible est dans un état inactif, le dispositif à liaisons multiples de station passant d'un état de veille à un état de réveil effectue une agrégation à liaisons multiples en liaison montante après avoir reçu des informations de retour du dispositif à liaisons multiples de point d'accès.

3. Procédé selon la revendication 1, dans lequel les premières informations comprennent une première image matricielle, la première image matricielle comprenant une pluralité de bits, chacun des bits de ladite pluralité correspondant à au moins une liaison, et différentes valeurs de chaque bit étant utilisées pour indiquer si au moins une liaison correspondant au bit est au moins une liaison cible pour la surveillance de laquelle le dispositif à liaisons multiples de point d'accès doit aider le dispositif à liaisons multiples de station.

4. Procédé selon la revendication 3, dans lequel les premières informations comprennent en outre des premières informations d'indication, lesdites premières informations d'indication étant utilisées pour indiquer que l'au moins une liaison cible identifiée par la première image matricielle est utilisée pour l'agrégation à liaisons multiples en liaison montante.

5. Procédé selon la revendication 1, dans lequel le sous-champ de contrôle A comprend au moins l'un parmi un champ d'identification, ID, de contrôle ou un champ de première image matricielle, où une valeur du champ d'identification de contrôle étant une première valeur montre que le champ de première image matricielle est utilisé pour l'agrégation à liaisons multiples en liaison montante, et le champ de première image matricielle est utilisé pour déterminer l'au moins une liaison cible pour la surveillance de laquelle le dispositif à liaisons multiples de point d'accès doit aider le dispositif à liaisons multiples de station.

6. Procédé selon l'une quelconque des revendications 1 à 5, comprenant en outre l'étape suivante :
recevoir, par le dispositif à liaisons multiples de station, une trame de déclenchement transmise par le dispositif à liaisons multiples de point d'accès, où la trame de déclenchement est utilisée pour déterminer au moins un état de liaison de l'au moins une liaison cible pour la surveillance de laquelle le dispositif à liaisons multiples de point d'accès doit aider le dispositif à liaisons multiples de station.

7. Procédé de surveillance de liaison, **caractérisé en ce qu'**il comprend l'étape suivante :
recevoir (S301), par un dispositif à liaisons multiples de point d'accès, des premières informations transmises par un dispositif à liaisons multiples de station, les premières informations étant utilisées pour déterminer au moins une liaison cible pour la surveillance de laquelle le dispositif à liaisons multiples de point d'accès doit aider le dispositif à liaisons multiples de station,
où les premières informations comprennent des informations d'identification, ID, relatives à l'au moins une liaison cible, et les informations d'identification de l'au moins une liaison cible sont indiquées par une image matricielle,
où les premières informations sont contenues dans un sous-champ de contrôle agrégé, A, au sein d'un champ de contrôle à haut débit, HT, d'une première trame, ladite première trame étant l'une parmi : une trame de contrôle d'enveloppe, une trame de gestion ou une trame de données.

8. Procédé selon la revendication 7, comprenant en outre l'étape suivante :
transmettre des informations de retour au dispositif à liaisons multiples de station.

9. Procédé selon la revendication 7, dans lequel les premières informations comprennent une première image matricielle, la première image matricielle comprenant une pluralité de bits, chacun des bits de ladite pluralité correspondant à au moins une liaison, et différentes valeurs de chaque bit étant utilisées pour indiquer si au moins une liaison correspondant au bit est au moins une liaison cible pour la surveillance de laquelle le dispositif à liaisons multiples de point d'accès doit aider le dispositif à liaisons multiples de station.

10. Procédé selon la revendication 7, dans lequel le sous-champ de contrôle A comprend au moins l'un parmi un champ d'identification, ID, de contrôle ou un champ de première image matricielle, où une valeur du champ d'identification de contrôle étant une première valeur montre que le champ de première image matricielle est utilisé pour l'agrégation à liaisons multiples en liaison montante, et le champ de première image matricielle est utilisé pour déterminer l'au moins une liaison cible pour la surveillance de laquelle le dispositif à liaisons multiples de point d'accès doit aider le dispositif à liaisons multiples de station.

11. Procédé selon l'une quelconque des revendications 7 à 10, comprenant en outre l'étape suivante :
transmettre, par le dispositif à liaisons multiples de point d'accès, une trame de déclenchement au dispositif à liaisons multiples de station, où la trame de déclenchement est utilisée pour indiquer au moins un état de liaison de l'au moins une liaison cible.

12. Dispositif $ à liaisons multiples de station, comprenant : un processeur et une mémoire destinée à stocker un programme informatique, le processeur étant configuré pour invoquer et exécuter le programme informatique stocké dans la mémoire afin de mettre en œuvre le procédé selon l'une quelconque des revendications 1 à 6.

13. Dispositif à liaisons multiples de point d'accès, comprenant : un processeur et une mémoire destinée à stocker un programme informatique, le processeur étant configuré pour invoquer et exécuter le programme informatique stocké dans la mémoire afin de mettre en œuvre le procédé selon l'une quelconque des revendications 7 à 11.
